# EUROPÄISCHE PATENTANMELDUNG

(11) **EP 2 450 830 A2**
(43) Veröffentlichungstag der Anmeldung: **09.05.2012**
(21) Anmeldenummer: 11008701.2
(22) Anmeldetag: 31.10.2011
(51) Int. Cl.: G06K 9/00

(54) **Verfallsdatum-Erkennung**

(30) Priorität: 06.11.2010 DE 102010050681
(71) Anmelder: Marquardt, Michael, 10623 Berlin (DE)
(72) Erfinder: Marquardt, Michael, 10623 Berlin (DE)
(74) Vertreter: Behrendt, Arne

(57) **Zusammenfassung**

Die Erfindung betrifft ein Verfahren und System zur Erfassung und Erkennung nicht gleichartiger, insbesondere durch unterschiedliche Druck- und Prägetechniken, auf eine Arzneimittelverpackung aufgebrachter Verfallsdaten unter Verwendung mindestens einer optischen Lesevorrichtung und eines Datenverarbeitungsgeräts, wobei die Seitenansichten der Arzneimittelverpackung mittels der mindestens einen Lesevorrichtung als Bild oder Datensatz erfasst werden, und das Bild oder der Datensatz mit Hilfe des Datenverarbeitungsgeräts anhand einer Vielzahl unterschiedlicher Erkennungsmethoden analysiert wird, wobei das Datenverarbeitungsgerät selbst lernend so ausgebildet ist, dass es gleiche Arzneimittelverpackungen erkennt und die mindestens eine Lesevorrichtung so steuert, dass lediglich die Seitenansicht der Arzneimittelverpackung erfasst wird, welche das Verfallsdatum trägt.

## Beschreibung

Die Erfindung betrifft ein Verfahren zur Erfassung und Erkennung nicht gleichartiger, insbesondere durch unterschiedliche Druck- und Prägetechniken, auf eine Arzneimittelverpackung aufgebrachter Verfallsdaten unter Verwendung mindestens einer optischen Lesevorrichtung und eines Datenverarbeitungsgeräts.

Die Erfassung und Erkennung der Verfallsdaten auf Arzneimittelverpackungen ist von besonderer Bedeutung für die Lagerhaltung des Apothekers und vor allem für die Sicherheit und Gesundheit des Patienten. Arzneimittel, deren Verfallsdatum überschritten ist, können schwerwiegende Folgen für die Gesundheit haben, so dass der Apotheker vor der Ausgabe an den Patienten das Verfallsdatum zu überprüfen hat. Da eine solche Datumskontrolle jedoch bei der Übergabe des Medikaments leicht vergessen werden kann, sind im Stand der Technik Verfahren bekannt, mit welchen das Verfallsdatum automatisch überwacht werden kann.

Die DE 10 2005 007 730 A1 beschreibt ein Verfahren und ein Lagersystem für die rechnergestützte Lagerung von Arzneimitteln, bei welchem während der Einlagerung die Sorte der einzulagernden Produkte mittels einer Identifizierungsvorrichtung erkannt wird und zusätzlich vor oder während des Einlagerungsvorgangs ein elektronischer, zu dem jeweiligen Produkt gehörender Datensatz in einen Rechner eingelesen wird. Dieser Datensatz enthält unter anderem die Information über das Verfallsdatum und kann beispielsweise direkt von dem Arzneimittelgroßhändler generiert werden. Bei diesem System wird stets die Mithilfe des Herstellers oder des Arzneimittelgroßhändlers vorausgesetzt, welcher die Verfallsdaten elektronisch, z. B. mit Hilfe eines elektronischen Lieferscheins, an den Apotheker übergeben muss.

Des Weiteren offenbart die Druckschrift DE 103 50 080 A1 eine Erfassungseinrichtung für den Kassenbereich von Lebensmittelmärkten oder auch Apotheken zur Erfassung eines Strichcodes, welcher neben der Produktidentifikation ebenfalls das Verfallsdatum enthält. Dieser Strichcode wird bei der Übergabe des Arzneimittels an den Patienten durch die Registrierkasse ausgelesen und verhindert somit die Abgabe eines Arzneimittels, welches das Verfallsdatum bereits überschritten hat. In der Praxis hat es sich noch nicht durchgesetzt, das Verfallsdatum in den Barcode zu integrieren. Bisher enthält der Barcode nur die Pharmazentralnummer (PZN), welche Aufschluss über das jeweilige Produkt gibt. Die Hinzunahme des Verfallsdatums in den Barcode hätte eine ständige Änderung des Barcodes zur Folge. Da täglich ein neuer Barcode generiert werden müsste, wird diese Methode der Verfallsdatum-Erkennung bisher noch nicht angewandt.

DE 196 25 307 C2 offenbart ein Verfahren zum Überwachen des Verkaufs von Arzneimitteln mit einer Einlesevorrichtung zum Einlesen des Verfallsdatums, wobei in einem ersten Schritt das Verfallsdatum in maschinenlesbarer Form auf die Arzneimittelverpackung aufgebracht wird und in einem zweiten Schritt das Verfallsdatum mit Hilfe der Einlesevorrichtung erfasst und das erkannte Verfallsdatum mit dem aktuellen Tagesdatum verglichen wird. Bei diesem System ist es notwendig, dass die Arzneimittelverpackungen genau mit einem solchen Aufdruck oder einer solchen Einprägung versehen werden, welche von der Einlesevorrichtung bestmöglich erfasst werden können. Insofern müssten die Arzneimittelverpackungen alle auf die gleiche Art und Weise markiert sein.

Alle genannten Verfahren und Systeme setzen ein einheitliches, maschinenlesbares Verfallsdatum auf der Verpackung oder einen separaten Datensatz, welcher das Verfallsdatum beinhaltet, voraus. Hierzu ist es jedoch erforderlich, dass die Verpackungen bereits mit einem für alle Produkte und Hersteller gleichartigen Verfallsdatum versehen sind. Diese Gleichartigkeit umfasst dabei sowohl die äußere Form, d. h. Strichcode, Aufdruck, Prägung, als auch das Datumsformat, Größe und Platzierung auf der Verpackung.

Die bekannten Systeme sind zum Einlesen der Verfallsdaten ganz unterschiedlicher Ausgestaltung jedoch nicht geeignet. So ergeben sich beispielsweise Probleme, wenn eine erste Verpackung ein aufgedrucktes Verfallsdatum mit sehr kontrastreicher Schrift aufweist und eine darauffolgende Verpackung keinen Aufdruck, sondern eine Prägung, welche Farbänderung, lediglich eine Änderung der Struktur der Verpackungsoberfläche aufweist.

Es ist daher Aufgabe der vorliegenden Erfindung, ein Verfahren und ein System zur Erfassung und Erkennung nicht gleichartiger, auf einer Arzneimittelverpackung aufgebrachter Verfallsdaten zu schaffen, welches die unterschiedlichsten Aufdrucke und Einprägungen verschiedener Arzneimittelprodukte und Hersteller zuverlässig erkennt.

Diese Aufgabe löst die vorliegende Erfindung dadurch, dass die Seitenansichten der Arzneimittelverpackung mittels der mindestens einen Lesevorrichtung als Bild oder Datensatz erfasst werden, und das Bild oder der Datensatz mit Hilfe des Datenverarbeitungsgeräts anhand einer Vielzahl unterschiedlicher Erkennungsmethoden analysiert wird, wobei das Datenverarbeitungsgerät selbst lernend so ausgebildet ist, dass es gleiche Arzneimittelverpackungen erkennt und die mindestens eine Lesevorrichtung so steuert, dass lediglich die Seitenansicht der Arzneimittelverpackung erfasst wird, welche das Verfallsdatum trägt.

Das erfindungsgemäße Verfahren bzw. System erfasst die Arzneimittelverpackung dabei prinzipiell von allen sechs Seiten, wobei hierzu entweder eine gemeinsame Lesevorrichtung für alle Seiten verwendet wird, oder mehrere separate Lesevorrichtungen um die Arzneimittelverpackung herumgefahren werden oder stationär angeordnet sind. Die Arzneimittelverpackung kann dabei so gehalten oder abgelegt werden, dass ihre Seitenansichten für die Lesevorrichtung oder die Lesevorrichtungen frei zugänglich sind. Hierfür kann die Verpackung beispielsweise hochgehalten werden oder auf einer für die Lesevorrichtung durchsichtigen Unterlage abgelegt werden.

Zur Erkennung der völlig unterschiedlichen Aufdrucke und Einprägungen auf den Arzneimittelverpackungen sieht die Erfindung die Anwendung einer Vielzahl unterschiedlicher Erkennungsmethoden vor. Die Erkennungsmethoden können dabei für den Fachmann bekannte Verfahren, wie z. B. Kantendetektion, Graustufenanalyse, Schattendetektion durch ein Streiflicht und viele andere, sein.

Durch die Kombination mehrerer unterschiedlicher Erkennungsmethoden wird die Zuverlässigkeit der Verfallsdatum-Erkennung auf bis zu 80% erhöht. Mit lediglich einer Erkennungsmethode kann eine Sicherheit von nur 5% erreicht werden. Die verwendeten Erkennungsmethoden können dabei so ausgeführt sein, dass sie unterschiedliche Datumsformate erkennen, beispielsweise tt.mm.jj. oder tt.mm.jjjj.

Für die Analyse der von der Lesevorrichtung aufgenommenen Seitenansicht kann sowohl ein Bild als auch ein Datensatz verwendet werden. Die Verwendung eines Bildes hat dabei den Vorteil, dass der Anwender gleichzeitig - während der automatischen Erkennung - das Bild betrachten kann. In dem Falle, dass das Datenverarbeitungsgerät ein Verfallsdatum nicht erkennen kann, kann der Anwender das Bild visuell betrachten und das Verfallsdatum manuell in das Datenverarbeitungsgerät eingeben. Alternativ wäre es auch möglich, dass die betreffende Arzneimittelverpackung mit dem nicht automatisch lesbaren Verfallsdatum von einem Greifer gegriffen und aussortiert wird.

Erfindungswesentlich für das hier vorgestellte Verfahren bzw. System ist es, dass das Datenverarbeitungsgerät selbstlernend ausgebildet ist. Somit kann es gleichartige Arzneimittelverpackungen aufgrund Ihrer Farblichkeit, Abmessungen oder auch der Pharmazentralnummer erkennen und die Lesevorrichtung direkt so ansteuern, dass nur die Seitenansicht der Arzneimittelverpackung erfasst wird, welche auch tatsächlich das Verfallsdatum trägt. Ebenso kann anstatt der kompletten Seitenansicht lediglich ein Ausschnitt, z. B. der Eckbereich, erfasst und analysiert werden. Durch die selbstlernende Ausgestaltung wird es somit möglich, die Erfassungs- und Erkennungszeit erheblich zu reduzieren.

In der Praxis hat es sich als besonders vorteilhaft herausgestellt, 7 bis 10 unterschiedliche Erkennungsmethoden zu verwenden. Die Kombination dieser Anzahl unterschiedlicher Methoden führt zu der oben genannten Erkennungssicherheit von 80%.

Vorteilhaft ist das erfindungsgemäße Verfahren so ausgestaltet, dass Lesevorrichtung und Datenverarbeitungsgerät ebenfalls den Barcode der Arzneimittelverpackung erfassen und erkennen. Somit werden keine zusätzlichen Geräte zur Erfassung und Erkennung des Barcodes benötigt. Dies spart Zeit und Kosten, da nicht zwei verschiedene Systeme aufeinanderfolgend eingesetzt werden müssen.

Vorteilhaft ist die mindestens eine Lesevorrichtung eine Kamera oder ein Scanner. Ebenfalls können im Falle der Verwendung mehrerer Lesevorrichtungen mehrere Kameras und Scanner miteinander kombiniert werden.

Es ist vorgesehen, dass die Erkennungsmethoden Methoden der Texterkennung, insbesondere Optical Character Recognition (OCR), beinhalten. Eine Texterkennung bietet sich deshalb an, weil optische Eingabegeräte (Scanner oder Digitalkameras) ausschließlich Rastergraphiken liefern können, d. h. in Zeilen und Spalten angeordnete Flächen unterschiedlicher Färbung (Pixel). Erst durch die Texterkennung können zusammengehörende Farbflächen, die Buchstaben darstellen, als solche erkannt werden. Die Methode der OCR führt einen Mustervergleich von separierten Bildteilen zur Erkennung von Einzelzeichen durch. Diesem Prozess geht eine globale Strukturerkennung voraus, in der zuerst Textblöcke von graphischen Elementen unterschieden, die Zeilenstrukturen erkannt und schließlich Einzelzeichen separiert werden. Diese Ergebnisse können durch nachfolgende Verfahren, in denen der Kontext berücksichtigt wird, präzisiert werden. Ursprünglich wurden zur automatischen Texterkennung eigens entworfene Schriftarten entwickelt, die z. B. für das Bedrucken von Scheckformularen verwendet wurden. Diese Schriftarten waren so gestaltet, dass die einzelnen Zeichen von einem OCR-Lesegerät schnell und ohne großen Rechenaufwand unterschieden werden konnten. Die gestiegene Leistungsfähigkeit moderner Computer und verbesserter Algorithmen erlauben inzwischen auch die Erkennung von normalen Druckerschriftarten bis hin zu Handschriften. Die in dieser Erfindung angewandte Texterkennung muss sich nicht auf die Methode der OCR beschränken. Zusätzlich können ebenfalls Methoden der Kontextanalyse Intelligent Character Recognition (ICR) hinzugezogen werden, mit welchen die OCR-Ergebnisse korrigiert werden können. Hierdurch kann das Texterkennungsprogramm beispielsweise die Ziffernfolge "1 3" als nicht zutreffend für eine Monatsangabe erkennen und eine auf die Texterkennung gestützte Alternative vorschlagen.

Eine Ausführungsvariante der Erfindung sieht vor, dass das Datenverarbeitungsgerät in einem definierten zeitlichen Abstand vor dem Verfallsdatum und/oder bei Erreichen des Verfallsdatums ein Warnsignal ausgibt. Wird das erfindungsgemäße Verfahren somit auf ein Arzneimittel angewandt, welches ein Verfallsdatum aufweist, das die gewünschte Mindestresthaltbarkeitsdauer unterschreitet, wird während des Erfassungsprozesses ein Warnsignal ausgegeben. Das gleiche gilt für den Fall, dass das Verfallsdatum bereits überschritten wurde. Ebenfalls wird dem Apotheker bei der Ausgabe des Arzneimittels an der Kasse ein solches Warnsignal angezeigt.

Vorteilhaft für das erfindungsgemäße Verfahren ist, dass die Arzneimittelverpackung mit Hilfe eines Manipulators gehalten und/oder gewendet wird. Die zu erfassenden Arzneimittelverpackungen können in diesem Fall beispielsweise aus einem Sammelbehälter entnommen werden und mit Hilfe des Manipulators vor die Lesevorrichtung gehalten werden. Alternativ kann der Manipulator die Arzneimittelverpackungen auch auf einem Fließband oder einer Fläche ablegen, welche der Lesevorrichtung eine geeignete Seitenansicht auf die Arzneimittelverpackung ermöglicht.

## Patentansprüche

1. Verfahren zur Erfassung und Erkennung nicht gleichartiger, insbesondere durch unterschiedliche Druck- und Prägetechniken, auf eine Arzneimittelverpackung aufgebrachter Verfallsdaten unter Verwendung mindestens einer optischen Lesevorrichtung und eines Datenverarbeitungsgeräts,
**dadurch gekennzeichnet, dass** die Seitenansichten der Arzneimittelverpackung mittels der mindestens einen Lesevorrichtung als Bild oder Datensatz erfasst werden, und das Bild oder der Datensatz mit Hilfe des Datenverarbeitungsgeräts anhand einer Vielzahl unterschiedlicher Erkennungsmethoden analysiert wird, wobei das Datenverarbeitungsgerät selbst lernend so ausgebildet ist, dass es gleiche Arzneimittelverpackungen erkennt und die mindestens eine Lesevorrichtung so steuert, dass lediglich die Seitenansicht der Arzneimittelverpackung erfasst wird, welche das Verfallsdatum trägt.

2. Verfahren nach Anspruch 1, **dadurch gekennzeichnet, dass** die Vielzahl unterschiedlicher Erkennungsmethoden 7 bis 10 beträgt.

3. Verfahren nach Anspruch 1 oder 2, **dadurch gekennzeichnet, dass** Lesevorrichtung und Datenverarbeitungsgerät ebenfalls den Barcode der Arzneimittelverpackung erfassen und erkennen.

4. Verfahren nach einem der vorhergehenden Ansprüche, **dadurch gekennzeichnet, dass** die mindestens eine Lesevorrichtung eine Kamera oder ein Scanner ist.

5. Verfahren nach einem der vorhergehenden Ansprüche, **dadurch gekennzeichnet, dass** die Erkennungsmethoden Methoden der Texterkennung, insbesondere Optical Character Recognition (OCR), beinhalten.

6. Verfahren nach einem der vorhergehenden Ansprüche, **dadurch gekennzeichnet, dass** das Datenverarbeitungsgerät in einem definierten zeitlichen Abstand vor dem Verfallsdatum und/oder bei Erreichen des Verfallsdatums ein Warnsignal ausgibt.

7. Verfahren nach einem der vorhergehenden Ansprüche, **dadurch gekennzeichnet, dass** die Arzneimittelverpackung mit Hilfe eines Manipulators gehalten und/oder gewendet wird.

8. System zur Erfassung und Erkennung nicht gleichartiger, insbesondere durch unterschiedliche Druck- und Prägetechniken, auf einer Arzneimittelverpackung angebrachter Verfallsdaten mit mindestens einer optischen Lesevorrichtung und einem Datenverarbeitungsgerät, **dadurch gekennzeichnet, dass** die mindestens eine Lesevorrichtung so ausgebildet ist, dass sie die Seitenansichten der Arzneimittelverpackung als Bild oder Datensatz erfasst, und dass das Datenverarbeitungsgerät so ausgebildet ist, dass es das Bild oder den Datensatz anhand einer Vielzahl unterschiedlicher Erkennungsmethoden analysiert, wobei das Datenverarbeitungsgerät selbst lernend so ausgebildet ist, dass es gleiche Arzneimittelverpackungen erkennt und die mindestens eine Lesevorrichtung so steuert, dass lediglich die Seitenansicht der Arzneimittelverpackung erfasst wird, welche das Verfallsdatum trägt.
